# FASCICULE DE BREVET EUROPEEN

(11) **EP 0 550 341 B1**
(45) Date de publication et mention de la délivrance du brevet: **12.04.1995**
(21) Numéro de dépôt: 92403577.7
(22) Date de dépôt: 30.12.1992
(51) Int. Cl.: B64D 41/00, B64C 13/40, C07D 239/00

(54) **Alimentation en fluide hydraulique du dispositif de régulation d'un moteur d'avion**
Hydraulikflüssigkeitversorgung einer Steuervorrichtung für einen Flugzeugmotor
Hydraulic fluid supply for the control device of an aircraft engine

(30) Priorité: 31.12.1991 FR 9116359
(43) Date de publication de la demande: 07.07.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Dehu, Michel Philippe, F-77370 La Chapelle Rablais (FR); Hebert, Pierre, F-33500 Libourne (FR); Hebraud, Guy René Etienne, F-31820 Pibrac (FR); Pean, Eric Charles, F-94430 Chennevieres (FR)

(56) Documents cités:
- EP-A- 0 307 974
- GB-A- 1 557 706
- US-A- 4 428 196

## Description

La présente invention concerne l'alimentation en fluide hydraulique du dispositif de régulation d'une turbomachine équipant un avion.

Les turbomachines actuelles sont très sophistiquées et comportent, afin d'améliorer leurs performances tant en poussée qu'en consommation de carburant, des systèmes de commande des géométries variables des stators de compresseur ou des carters d'entrée et des systèmes de contrôle actif des jeux de turbines et compresseurs.

Ces systèmes sont mûs par des actionneurs dont la puissance motrice est générée par un fluide hydraulique sous pression qui est généralement du carburant.

Ce débit de carburant sous pression est fourni par un ensemble de pompes. Une partie du carburant est brûlée dans la chambre de combustion et l'autre partie est dirigée vers les circuits d'asservissement et de commande des actionneurs et renvoyée en amont de la pompe basse pression par la soupape régulatrice.

Ainsi toute avarie grave sur le circuit d'asservissement de la turbomachine provoquera l'arrêt du moteur et l'impossibilité de commander les systèmes de commande des géométries variables et les systèmes de contrôle des jeux.

D'autre part l'avion comporte également son propre circuit hydraulique de commande et d'asservissement, alimenté par une source de fluide sous pression indépendante, destiné à fournir une force motrice aux organes de commande de l'avion. Le fluide hydraulique utilisé dans le circuit hydraulique de commande de l'avion est en général incompressible et ininflammable. Ce fluide est soumis à une pression nettement plus élevée que la pression du carburant de la turbomachine.

Le but de la présente invention est de fournir une alimentation redondante des circuits hydrauliques de commande et d'asservissement du moteur et de l'avion.

La présente invention concerne donc un avion comportant son propre circuit hydraulique de commande et d'asservissement et équipé d'au moins un moteur, asservi par un dispositif de régulation, ledit dispositif de régulation comprenant un calculateur électronique chargé notamment, à partir de demandes reçues et des informations de retour du moteur, d'élaborer les ordres de commande des organes de puissance et d'asservissement dudit moteur, lesdits organes étant mûs par des actionneurs dont la puissance motrice est générée par un débit de fluide sous pression délivré dans un circuit hydraulique propre audit moteur par un modulateur de pressions hydrauliques piloté par ledit calculateur électronique et alimenté par une source de fluide sous pression.

L'invention atteint son but par le fait que le fluide utilisé dans le circuit hydraulique du moteur est identique au fluide hydraulique du circuit hydraulique de l'avion, et par le fait qu'il est prévu un générateur de fluide hydraulique sous pression entraîné par ledit moteur et destiné notamment à fournir du fluide hydraulique sous pression au modulateur de pressions hydrauliques, et un sélecteur de circuits hydrauliques connecté au circuit hydraulique de l'avion et interposé entre ledit générateur et ledit modulateur, ledit sélecteur étant commandé par le calculateur électronique pour fournir audit modulateur du fluide hydraulique sous pression issu soit dudit générateur soit du circuit hydraulique de l'avion.

De préférence le générateur de fluide hydraulique sous pression est également connecté au circuit hydraulique de l'avion.

La commande redondante des asservissements du moteur permettra au turboréacteur de continuer à fonctionner même en cas de panne de sa génération de débit hydraulique. De plus le fluide hydraulique utilisé étant de préférence incompressible, ceci permettra une meilleure qualité de commande en position des asservissements de la turbomachine.

Le niveau de pression du fluide d'asservissement pouvant être plus élevé, les actionneurs pourront être de plus petites dimensions et plus efficaces. Le débit des pompes à carburant pourra être diminué puisque le débit nécessaire aux asservissements ne sera plus demandé ; ainsi ces pompes seront plus petites et plus légères. La boucle de retour du carburant chaud vers les réservoirs de l'avion pourra être diminuée, voire supprimée. Les générateurs locaux de pressions régulées pourront être supprimés, ainsi que les canalisations de liaison.

Le circuit utilisant le fluide hydraulique est un circuit fermé. Le risque de pollution dû à la présence de corps étrangers est faible ; aussi le nombre des dispositifs filtrant pourra être réduit.

La maintenance du moteur est facilitée car les géométries variables pourront être commandées lorsque le moteur sera arrêté et il sera aussi possible de s'assurer de leur bon fonctionnement sans consommer le potentiel du moteur.

Le fonctionnement des géométries variables étant assuré indépendamment des circuits de commande du moteur, il ne dépend donc plus du régime de rotation de ce dernier. Ceci améliore la sûreté opérationnelle de l'avion, car la vitesse de rotation du moteur permettant le rallumage sera abaissée.

Enfin le dimensionnement de la pompe à carburant n'étant plus lié qu'au débit nécessaire à la combustion, le bilan se trouve amélioré, ce qui peut entraîner une diminution de volume, voire la suppression des échangeurs de chaleur.

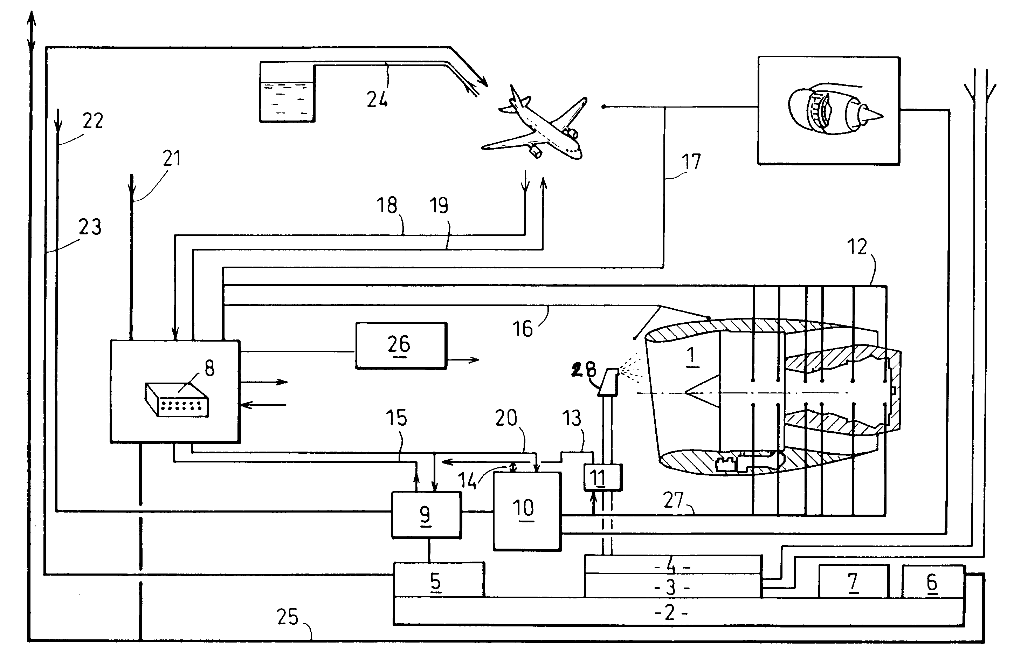

D'autres avantages et caractéristiques de l'invention ressortiront à la lecture de la description suivante faite à titre d'exemple et en référence au dessin annexé dans lequel la figure unique montre le schéma de principe des circuits hydrauliques de commande et d'asservissement de l'avion et d'un moteur de cet avion, le schéma de principe du dispositif de régulation dudit moteur et des circuits électriques d'alimentation du dispositif de régulation.

Le moteur 1 entraîne par l'intermédiaire d'un arbre, non représenté sur le dessin, un boîtier d'équipements 2 sur lequel sont fixés : une pompe à carburant basse pression 3, une pompe à carburant à haute pression 4, une pompe indépendante 5 destinée à mettre un fluide hydraulique sous haute pression, un démarreur-alternateur 6 et un module de lubrification 7 du moteur 1.

La référence 21 représente le circuit électrique propre à l'avion et la référence 22 représente le circuit hydraulique de puissance et d'asservissement des organes propres à l'avion dans lequel se trouve un fluide hydraulique ininflammable et incompressible (SKYDROL par exemple) à une pression supérieure à la pression du carburant délivré par la pompe à haute pression 4. La référence 27 représente le circuit hydraulique de commande et d'asservissement propre au moteur 1, et la référence 24 représente le circuit de retour vers la bâche avion ou moteur.

Le moteur 1 supporte également un calculateur électronique 8, un sélecteur de circuit hydrauliques 9 et un modulateur des pressions hydrauliques 10 piloté par le calculateur électronique 8 et permettant d'asservir les équipements du moteur 1, de la nacelle et même de l'avion, par exemple l'inverseur de poussée ou les prélèvements d'air par la délivrance d'un débit de fluide hydraulique sous pression dans le circuit hydraulique 27 qui agit sur des actionneurs.

Le sélecteur de circuits hydrauliques 9 est interposé entre la pompe à haute pression 5 et le modulateur des pressions hydrauliques 10. Ce sélecteur 9 est relié au circuit hydraulique 21 de l'avion et il est commandé par le calculateur électronique 8 qui choisit d'envoyer le débit de fluide hydraulique du circuit hydraulique 22 de l'avion ou celui fournit par la pompe 5 au modulateur 10. Le fluide hydraulique utilisé dans le circuit hydraulique 27 du moteur 1 est identique au fluide hydraulique employé dans le circuit hydraulique 22 de l'avion.

La pompe 5 est de plus connectée au circuit hydraulique 22 de l'avion par un circuit 23. De cette façon il y a une redondance dans l'alimentation du circuit hydraulique 22 de l'avion et du circuit hydraulique 27 du moteur 1.

Le moteur 1 supporte également un ensemble de dosage 11 du débit de carburant qui est interposé entre la pompe à haute pression 4 et les injecteurs 28 disposés dans la chambre de combustion du moteur 1. Cet ensemble de dosage est commandé par du fluide hydraulique ou par du carburant.

Le calculateur électronique 8 est relié aux capteurs de position 12 des géométries variables du moteur 1, au capteur de position 13 du doseur 11 du débit de carburant, au capteur de position 14 du modulateur des pressions hydrauliques 10, au capteur de position 15 du sélecteur 9, aux différents capteurs 16 de températures et de pression du moteur 1, aux capteurs 17, 18 de l'avion et de la nacelle, et aux actionneurs 19, 20 de l'avion, de la nacelle et du moteur 1.

Un câblage électrique 25 relie l'alimentation électrique 21 de l'avion au démarreur-alternateur 6 et au calculateur 8, et permet d'alimenter le moteur électrique 6 pour le démarrage du turboréacteur 1 et d'alimenter en courant l'avion et le calculateur électronique 8 en fonctionnement normal. Le calculateur électronique 8 pilote également la boîte d'allumage 26.

## Revendications

1. Avion comportant son propre circuit hydraulique (22) de commande et d'asservissement et équipé d'au moins un moteur (1), asservi par un dispositif de régulation, ledit dispositif de régulation comprenant un calculateur électronique (8) chargé notamment, à partir de demandes reçues et des informations de retour du moteur (1), d'élaborer les ordres de commande des organes de puissance et d'asservissement dudit moteur (1), lesdits organes étant mûs par des actionneurs dont la puissance motrice est générée par un débit de fluide sous pression délivré dans un circuit hydraulique (27) propre audit moteur (1) par un modulateur (10) de pressions hydrauliques piloté par ledit calculateur électronique (8) et alimenté par une source de fluide sous pression,
caractérisé en ce que le fluide utilisé dans le circuit hydraulique (27) du moteur (1) est identique au fluide hydraulique du circuit hydraulique (22) de l'avion, et
en ce qu'il est prévu un générateur (5) de fluide hydraulique sous pression entraîné par ledit moteur (1) et destiné notamment à fournir du fluide hydraulique sous pression au modulateur (10) de pressions hydrauliques, et un sélecteur (9) de circuits hydrauliques connecté au circuit hydraulique (22) de l'avion et interposé entre ledit générateur (5) et ledit modulateur (10), ledit sélecteur (9) étant commandé par le calculateur électronique (8) pour fournir audit modulateur (10) du fluide hydraulique sous pression issu soit dudit générateur (5) soit du circuit hydraulique (22) de l'avion.

2. Avion selon la revendication 1, caractérisé en ce que le générateur (5) de fluide hydraulique sous pression est connecté au circuit hydraulique (22) de l'avion.

3. Avion selon l'une quelconque des revendications 1 ou 2, caractérisé en ce que ledit générateur (5) est une pompe à haute pression.

## Claims

1. Aircraft including its own hydraulic command and automatic-control circuit (22) and equipped with at least one engine (1), automatically controlled by a control device, the said control device comprising an electronic computer (8) tasked especially, on the basis of requests received and information returning from the engine (1), with establishing the orders for commanding the power and automatic-control members of the said engine (1), the said members being moved by actuators, the motive power of which is generated by a flow rate of pressurized fluid delivered to a hydraulic circuit (27) belonging to the said engine (1) by a hydraulic pressure modulator (10) driven by the said electronic computer (8) and supplied by a source of pressurized fluid, characterized in that the fluid used in the hydraulic circuit (27) of the engine (1) is identical to the hydraulic fluid in the hydraulic circuit (22) of the aircraft, and in that a generator (5) of pressurized hydraulic fluid is provided, driven by the said engine (1) and intended especially to provide the hydraulic pressure modulator (10) with pressurized hydraulic fluid, and a hydraulic circuit selector (9) connected to the hydraulic circuit (22) of the aircraft and interposed between the said generator (5) and the said modulator (10), the said selector (9) being controlled by the electronic computer (8) to provide the said modulator (10) with pressurized hydraulic fluid coming either from the said generator (5) or from the hydraulic circuit (22) of the aircraft.

2. Aircraft according to Claim 1, characterized in that the generator (5) of pressurized hydraulic fluid is connected to the hydraulic circuit (22) of the aircraft.

3. Aircraft according to either one of Claims 1 and 2, characterized in that the said generator (5) is a high pressure pump.

## Patentansprüche

1. Flugzeug, das seinen eigenen hydraulischen Steuer- und Regelkreis (22) besitzt und mit mindestens einem Motor (1) ausgerüstet ist, der von einer Steuervorrichtung betätigt wird, wobei die genannte Steuervorrichtung aus einem elektronischen Rechner (8) besteht, dessen Funktion insbesondere darin besteht, auf Grundlage von empfangenen Anfragen und Rückinformationen des Motors (1) die Steuerbefehle für die Leistungs- und Regelorgane des genannten Motors (1) zu entwickeln, wobei die genannten Organe durch Betätigungsorgane bewegt werden, deren Antriebskraft durch eine unter Druck stehende Fluid- bzw. Flüssigkeitsmenge erzeugt wird, die in einen eigenen Hydraulikkreis (27) des genannten Motors (1) durch einen Hydraulikdruckmodulator (10) abgegeben wird, der von dem genannten elektronischen Rechner (8) gesteuert wird und durch eine Druckflüssigkeitsquelle gespeist wird,
dadurch gekennzeichnet,
daß die in dem Hydraulikkreis (27) des Motors (1) verwendete Flüssigkeit identisch ist mit der Hydraulikflüssigkeit des Hydraulikkreises (22) des Flugzeugs, und daß ein Erzeuger (5) von unter Druck stehender Hydraulikflüssigkeit, der durch den genannten Motor (1) angetrieben wird und insbesondere dazu gedacht ist, an den Hydraulikdruckmodulator (10) unter Druck stehende Hydraulikflüssigkeit abzugeben, sowie ein mit dem Hydraulikkreis (22) des Flugzeugs verbundener und zwischen dem genannten Erzeuger (5) und dem genannten Modulator (10) angeordneter Hydraulikkreis-Wahlschalter (9) vorgesehen ist, wobei der genannte Wahlschalter (9) von dem elektronischen Rechner (8) gesteuert wird, um an den genannten Modulator (10) unter Druck stehende Hydraulikflüssigkeit abzugeben, die entweder aus dem genannten Erzeuger (5) oder aus dem Hydraulikkreis (22) des Flugzeugs stammt.

2. Flugzeug nach Anspruch 1, dadurch gekennzeichnet, daß der Erzeuger (5) von unter Druck stehender Hydraulikflüssigkeit mit dem Hydraulikkreis (22) des Flugzeugs verbunden ist.

3. Flugzeug nach einem der Ansprüche 1 oder 2, dadurch gekennzeichnet, daß der genannte Erzeuger (5) eine Hochdruckpumpe ist.
